# EUROPEAN PATENT SPECIFICATION

(11) **EP 1 881 027 B1**
(45) Date of publication and mention of the grant of the patent: **05.11.2008**
(21) Application number: 06253732.9
(22) Date of filing: 17.07.2006
(51) Int. Cl.: C08L 23/10, B29C 41/04

(54) **Use of Polypropylene composition**
Verwendung einer Polypropylen-Zusammensetzung
Utilisation de composition de polypropylène

(43) Date of publication of application: 23.01.2008
(73) Proprietor: Borealis Technology Oy, 06101 Porvoo (FI)
(72) Inventor: Ommundsen, Espen, 3970 Langesund (NO); Doshev, Peter, 3920 Porsgrunn (NO); Finstad, Heidi, 3925 Porsgrunn (NO); Ervik, Ronny, 3960 Stathelle (NO)
(74) Representative: Gordon, Kirsteen Helen

(56) References cited:
- EP-A1- 0 636 650
- EP-A1- 0 972 802
- EP-A1- 1 086 986
- WO-A-20/04062896

## Description

The present invention relates to use of a particular polypropylene in rotomoulding, to rotomoulding processes using the composition and to the rotomoulded articles that result. More specifically the invention concerns use of a polymer composition for rotomoulding that comprises at least two polypropylene components and at least one nucleating agent.

Rotational moulding (or rotomoulding) is a moulding process in which a particulate polymer, the moulding powder, is filled into a mould which is placed into an oven and rotated so that the polymer melts and coats the inside of the surface of the mould. In order to ensure that the moulded product is defect free it is necessary to form a homogeneous melt. A key step in rotomoulding is therefore sintering of the moulding powder. This is characterised by the occurrence of coalescence of the moulding powder and the production of a porous three dimensional network. Other steps that occur in the mould are densification, bubble removal and surface levelling. After cooling, the moulded product is simply removed from the mould.

A wide variety of articles may be prepared by rotomoulding but the technique is particularly useful for the production of large objects. Examples of articles that may be made by rotomoulding include containers (e.g. boxes, drums, tanks, tubs), furniture, sports and leisure equipment, toys and garden equipment. Use of rotomoulding for the production of interior parts, e.g. washing machine or dishwater parts or automotive parts is also common.

Articles made by rotomoulding typically have well defined shapes and it is important that the eventual rotomoulded product has the dimensions that the mould is intended to produce. This is critical, for example, when the rotomoulded article is designed to fit or interact with another article or a specific environment. Rotomoulded products should therefore display minimum warpage.

A variety of polymers have been rotomoulded although homopolymer and copolymers of ethylene are most commonly used. Borcene® is, for example, a commercially available rotomoulding polyethylene which is available from Borealis AS.

Whilst polyethylenes can successfully be used for rotomoulding of a wide variety of articles, there has been a growing interest in rotomoulding of polypropylene. Propylene polymers have excellent thermo-mechanical properties such as high stiffness and high temperature stability and therefore have the potential to expand the range of products that can be made by rotomoulding. WO03/091295, for example, describes rotomoulding of metallocene-produced syndiotactic polypropylene or an isotactic random copolymer of propylene and WO02/070602 describes rotomoulding of propylene compositions, preferably comprising syndiotactic and isotactic polypropylene.

However, rotomoulding of polypropylene is not straightforward. Polypropylene is intrinsically brittle, which is additionally aggravated by the slow crystallisation that occurs during rotomoulding and results in a coarse spherulitic structure. In some types of moulding, nucleating agents can be employed to reduce the spherullite size. However, the finer microstructure of nucleated propylene polymers is generally associated with a higher degree of crystallinity, which in rotomoulding is expected to result in increased warpage.

Warpage is a problem that commonly occurs in rotomoulding due to the asymmetrical cooling that occurs. The outer wall of the article is in contact with the mould and is therefore cooled faster than the inner wall, where the heat loss is almost negligible. This creates a solidification front moving from the outer wall towards the inner wall and thus the volume contraction due to crystallisation induces asymmetrical residual stresses and warpage in the final product. The greater the crystallinity of the polymer, the greater the volume contraction due to crystallisation, and hence asymmetrical residual stress and warpage are also increased.

There still remains a need therefore for a polypropylene composition for rotomoulding which yields articles having good stiffness as well as low warpage and dimensional stability. To date, no polypropylene-based composition has been rotomoulded that provides articles having an attractive balance of all of these properties. However, it has now surprisingly been found that rotomoulded articles having a desirable combination or balance of these properties may be provided by rotomoulding a polymer composition comprising at least two polypropylene components and a nucleating agent.

Thus viewed from a first aspect the invention provides use of a polymer composition for rotomoulding, wherein said composition comprises:
(i) at least two propylene polymer components; and
(ii) a nucleating agent.

Viewed from a further aspect the invention provides a process for the preparation of an article comprising rotomoulding a polymer composition as hereinbefore defined.

Viewed from a still further aspect the invention provides a rotomoulded article comprising a polymer composition as hereinbefore defined.

The polypropylene present in the compositions used in the present invention comprise two or more (e.g. three or four) propylene polymer components. Preferably, however, the polypropylene comprises two propylene polymer components.

The propylene polymer components present in the compositions used in the present invention preferably have different structures in the polymer chains, e.g. the components may have different tacticity and/or different comonomer content. Particularly preferred compositions for use in the invention comprise at least two propylene polymer components having different crystallisation temperatures (Tc). Still more preferably the compositions comprise at least two propylene polymer components having a difference of at least 5 °C in their Tcs, more preferably at least a difference of 10 °C in their Tcs; e.g. 5-30 °C difference in their Tcs, still more preferably a 10-25 °C difference in their Tcs. By the phrase "different crystallisation temperatures" is meant herein that the polymers *per se* (i.e. prior to addition of any nucleating agent) have different Tcs.

The propylene polymer components present in the compositions used in the invention preferably have different comonomer contents. In other words, in preferred compositions, the propylene polymer is multimodal (e.g. bimodal). As used herein, the term multimodal means that the polymer comprises of two or more components each having a different comonomer distribution (e.g. different comonomers and/or comonomer content (wt%)). Correspondingly the term bimodal refers to polymers having two different components each having a different comonomer distribution. In particularly preferred compositions, the polypropylene is bimodal.

The propylene polymer components may all be propylene copolymers or all be propylene homopolymers. Preferably, however, the propylene polymer components comprise a propylene homopolymer and one or more propylene copolymers.

Particularly preferably the polypropylene present in compositions for use in the present invention comprise at least 20 wt%, more preferably at least 30 wt%, still more preferably at least 40 wt% of each propylene component (e.g. homopolymer and copolymer) based on the total weight of the composition.

As used herein the term propylene homopolymer is intended to encompass polymers which consist essentially of repeat units deriving from propylene. Homopolymers may, for example, comprise at least 90 %, more preferably at least 95 %, still more preferably about 99 %, e.g. 100 % by weight of repeat units deriving from propylene.

As used herein the term propylene copolymer is intended to encompass polymers comprising repeat units from propylene and at least one other monomer. In typical copolymers at least 1 %, preferably at least 5 %, e.g. at least 10 % by weight of repeat units derive from at least one monomer other than propylene.

The propylene homopolymer component that may be present in the compositions of the present invention preferably has an MFR₂ in the range 2 to 40 g/10min, more preferably 10 to 25 g/10min, e.g. about 20 g/10min. Preferably the homopolymer is isotactic.

The propylene copolymer component that may be present in the compositions of the invention may be a block copolymer or a random copolymer, but is preferably a random copolymer. By a random copolymer is meant herein that the comonomer is distributed mainly randomly along the polymer chain. Preferred random copolymers are those made using Ziegler Natta catalysts.

The propylene copolymer component comprises an α-olefin, e.g. a C₂₋₁₈ α-olefin other than propylene. Examples of suitable monomers include ethylene, but-1-ene, pent-1-ene, hex-1-ene and oct-1-ene, especially ethylene. In preferred copolymers the only monomers present are propylene and ethylene. The total amount of α-olefin (e.g. ethylene) that is copolymerised with propylene may be 1-20 mol%, preferably 2.5 to 10 mol%, e.g. 3.5 to 7 mol% based on the weight of the copolymer.

When all of the components of polypropylene are copolymers, it is required that the polymers be different. Thus when all of the components are copolymers, it is preferred that the amount of comonomer used in each component will be different, e.g. at least differing by 1 wt%, e.g. at least 2 wt%, preferably at least 3 wt%.

The propylene copolymer component present in the compositions preferably has an MFR₂ in the range 5 to 40 g/10min, more preferably 10 to 25 g/10min, e.g. about 23 g/10min.

The polypropylene used in the present invention may be unimodal or multimodal (e.g. bimodal) in molecular weight distribution (MWD). Preferably the MWD is in the range 1.5 to 10, more preferably 2 to 7, still more preferably 3 to 5, e.g. about 2 to 4.

The composition for use in the invention also comprises a nucleating agent. More preferably the composition for use in the invention comprises at least two (e.g. two) different nucleating agents.

Any conventional nucleating agent may be used, e.g. a non-polymeric nucleating agent (e.g. aromatic or aliphatic carboxylic acids, aromatic metal phosphates, sorbitol derivatives and talc) or a polymeric nucleating agent. Suitable non-polymeric nucleating agents include dibenzylidene sorbitol compounds (such as unsubstituted dibenzylidene sorbitol (DBS), p-methyldibenzylidene sorbitol (MDBS), 1,3-O-2, 4-bis (3, 4-dimethylbenzylidene) sorbitol (DMDBS) (available from Milliken under the trade name Millad 3988)), sodium benzoate, talc, metal salts of cyclic phosphoric esters (such as sodium 2, 2'-methylene-bis- (4, 6-di-tert-butylphenyl) phosphate (from Asahi Denka Kogyo K. K., known as NA-11), and cyclic bis-phenol phosphates (such as NA-21, also available from Asahi Denka)), metal salts (such as calcium) of hexahydrophthalic acid, and the unsaturated compound of disodium bicyclo [2.2. 1] heptene dicarboxylate, known as HPN-68 available from Milliken

Commercially available products preferred for use in the practice of the present invention include Millad 3988 (3, 4-dimethyldibenzylidene sorbitol) available from Milliken, NA-11; (sodium 2,2-methylene-bis- (4, 6, di-tert-butylphenyl) phosphate, available from Asahi Denka Kogyo, and NA-21 (aluminum bis [2,2'-methylene-bis- (4, 6-di-tert-butylphenyl) phosphate]),from Asahi Denka Kogyo.

More preferably, however, the composition used in the present invention is nucleated with a polymeric nucleating agent, e.g. a polymer derived from vinyl cycloalkanes and/or vinyl alkanes. Still more preferably the composition is nucleated with a polymer containing vinyl compound units.

A polymeric nucleating agent containing vinyl compound units may be a homopolymer of a vinyl compound or a copolymer of different vinyl compounds Preferably the polymeric nucleating agent is a homopolymer of a vinyl compound.

Preferred polymeric nucleating agents present in the compositions of the present invention comprise vinyl compound units deriving from a vinyl compound of formula (I): 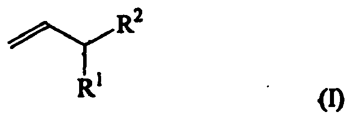 wherein R¹ and R², together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or R¹ and R² independently represent a linear or branched C₄₋₃₀ alkane, a C₄₋₂₀ cycloalkane or a C₄₋₂₀ aromatic ring.

Preferably R¹ and R², together with the carbon atom they are attached to, form an optionally substituted, optionally C₁₋₂ bridged, 5 or 6 membered saturated, unsaturated or aromatic ring or R¹ and R² independently represent a C₁₋₄ alkyl group.

In further preferred compounds of formula (I), R¹ and R², together with the carbon atom they are attached to, form a 6 membered ring. Still more preferably R¹ and R², together with the carbon atom they are attached to, form a non-aromatic ring (i.e. a vinyl cycloalkane). In particularly preferred compounds the ring formed by R¹ and R², together with the carbon atom they are attached to, is unsubstituted.

Representative examples of vinyl compounds which may be present in the polymeric nucleating agent include vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof. Vinyl cyclohexane is a particularly preferred vinyl compound.

In particularly preferred compositions for use in the present invention a propylene homopolymer is nucleated with a polymeric nucleating agent as hereinbefore defined. Still more preferably the compositions for use in the invention further comprises a propylene copolymer nucleated with a polymeric nucleating agent or a non-polymeric nucleating agent (e.g. a non-polymeric nucleating agent).

Non-polymeric nucleating agents may be added to the compositions for use in the invention in an amount from about 0.01 percent to about 10 percent by weight based on the weight of the total composition. In most applications, however, less than about 3.0 percent by weight (based on weight of total composition) are required. In some applications, such compounds may be added in amounts from about 0.05 to about 0.3 % (based on weight of total composition) to provide beneficial characteristics.

Polymeric nucleating agents may be present in the compositions used in the present invention in amounts of greater than 0.1 ppm, e.g. from about 0.1 to 1000 ppm based on the weight of the total composition. More preferably polymeric nucleating agents may be added to the compositions in amounts (based on total weight of the composition) of greater than 0.5 ppm, still more preferably in amounts of 1 to 500 ppm, especially preferably 2 to 100 ppm, e.g. 3 to 50 ppm.

One effect of adding a nucleating agent to the compositions used in the invention may be to increase the Tc of a propylene polymer component. In compositions wherein one propylene component is nucleated, it is preferred that the Tc of a nucleated propylene polymer component and the Tc of a non-nucleated polymer component are different (e.g. by at least 3 °C, more preferably at least 5 °C, still more preferably at least 10 °C). Preferably the Tcs of the components are different by 5-30 °C, more preferably 10-25 °C. In compositions wherein at least two propylene polymer components are nucleated, it is preferred that the Tcs of the nucleated components are different. Still more preferably the nucleated propylene polymer components have Tcs that differ by at least 3 °C, more preferably at least 5 °C, still more preferably at least 10 °C, e.g. 5-30 °C or 10-25 °C.

The polypropylene present in the compositions used in the invention may be prepared by simple blending (e.g. melt blending, preferably extrusion blending), by two or more stage polymerisation or by the use of two or more different polymerisation catalysts in a one stage polymerisation. Blending may, for example, be carried out in a conventional blending apparatus (e.g. an extruder). Propylene homopolymers and copolymers (e.g. random copolymers) that may be used in this invention are commercially available from various suppliers, e.g. Borealis A/S.

Alternatively the polypropylene may be produced in a multi-stage polymerisation using the same catalyst, e.g. a metallocene catalyst or preferably a Ziegler-Natta catalyst. In a preferred multi-stage polymerisation a slurry polymerisation in a loop reactor is followed by a gas phase polymerisation in a gas phase reactor. Conventional cocatalysts, supports/carriers, electron donors etc. can be used.

A loop reactor - gas phase reactor system is described in EP-A-0887379 and WO92/12182, the contents of which are incorporated herein by reference, and is marketed by Borealis A/S, Denmark as a BORSTAR reactor system. The propylene polymer used in the invention is thus preferably formed in a two stage process comprising a first slurry loop polymerisation followed by gas phase polymerisation in the presence of a Ziegler-Natta catalyst.

With respect to the above-mentioned preferred slurry-gas phase process, the following general information can be provided with respect to the process conditions.

A temperature of from 40°C to 110°C, preferably between 60°C and 100°C, in particular between 80°C and 90°C is preferably used in the slurry phase. The pressure in the slurry phase is preferably in the range of from 20 to 80 bar, preferably 30 to 60 bar, with the option of adding hydrogen in order to control the molecular weight being available. The reaction product of the slurry polymerization, which preferably is carried out in a loop reactor, is transferred to a subsequent gas phase reactor, wherein the temperature preferably is within the range of from 50°C to 130°C, more preferably 80°C to 100°C. The pressure in the gas phase reactor is preferably in the range of from 5 to 50 bar, more preferably 15 to 35 bar, again with the option of adding hydrogen in order to control the molecular weight available.

The residence time can vary in the reactor zones identified above. The residence time in the slurry reaction, for example the loop reactor, may be in the range of from 0.5 to 5 hours, for example 0.5 to 2 hours. The residence time in the gas phase reactor may be from 1 to 8 hours.

The properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of the polymer.

Preferably, the first propylene polymer component of the polymer used in the invention is produced in a continuously operating loop reactor where propylene (and comonomer when required) is polymerised in the presence of a polymerisation catalyst (e.g. a Ziegler Natta catalyst) and a chain transfer agent such as hydrogen. The diluent is typically an inert aliphatic hydrocarbon, preferably isobutane or propane.

The second propylene polymer component can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879.

Nucleation of the propylene components for use in the invention may be carried out by conventional techniques, e.g. by blending. More preferably, however, when the nucleating agent is a polymer containing vinyl compound units, nucleated propylene polymers are made by modifying a polymerisation catalyst with vinyl compounds as hereinbefore described and using the modified catalyst for the polymerisation of propylene, optionally in the presence of comonomers. The catalyst systems and reaction conditions suitable for application in this latter method are described in WO99/24501. For instance, examples 1 and 2 described therein disclose a specific procedure which may be used to prepare a propylene polymer comprising a polymeric nucleating agent for use in the compositions of the present invention.

The polymer compositions of the present invention may also contain any conventional additives (e.g. process, heat and light stabilisers, colorants, antistatic agents, antioxidants, carbon black, pigments, flame retardants, foaming agents, blowing agents etc). A filler may also be present (e.g. talc).

The compositions of the present invention may further comprise an impact modifier. By "impact modifier" is meant any polymer that functions to increase the impact resistance of the polymer compositions. Any conventional impact modifier may be used (e.g. any elastomer or plastomer). For example the impact modifier may be one or more elastomeric copolymer of propylene and one or more olefin comonomer (e.g. EPR), a LLDPE, a LDPE, or a mixture thereof.

The elastomeric copolymer of propylene and one or more olefin comonomer preferably comprises 20 to 90 %wt of olefin comonomer (e.g. ethylene or C₄₋₈ α-olefin). Suitable amounts of ethylene or C₄₋₈ α-olefin in the elastomeric propylene copolymer are 25 to 75 %wt, more preferably 30 to 60 %wt. Preferably the comonomer is ethylene.

Particularly preferably the elastomeric copolymer of propylene and one or more olefin comonomer is ethylene-propylene-diene (EPDM) or ethylene propylene rubber (EPR) (e.g. EPR). Suitable EPRs for use in the invention are commercially available. For example Dutral CO 058 from Polimeri Europa may be used as the impact modifier.

LLDPE that may be present as an impact modifier is preferably a copolymer of ethylene and one or more olefin comonomers, (e.g. C₃₋₈ α-olefin). Suitable amounts of C₃₋₈ α-olefin in the copolymer are 3 to 50 %mol, more preferably 5 to 30 %mol, e.g. 7 to 20 %mol. Preferably the comonomer is propylene, butene or octene, e.g. octene.

Preferably the LLDPE has a MFR₂ of 0.5 to 30 g/10min, more preferably 3-15 g/10min, still more preferably 4 to 12 g/lOmin. Still more preferably the LLDPE has a density of 820-910 kg/m³, more preferably 850-900g/m³, e.g. about 860-890 kg/m³, LLDPE for use an impact modifier is commercially available from ExxonMobil under the tradenames Exact 5361 and Vistamaxx VM6100 and from DexPlastomers under the tradename Exact 8210.

LDPE that may be present as an impact modifier preferably has a MFR₂ of 0.5 to 30 g/10min, more preferably 1-15 gl10min. Still more preferably the LDPE has a density of 900-990 kg/m³, more preferably 905-930 kg/m³, e.g. about 910-925 kg/m³. LDPE for use an impact modifier is commercially available from Borealis A/S under the tradenames CA9150 and FG5190.

Preferred impact modifiers present in the compositions used in the invention include EPR and/or LLDPE as hereinbefore described. A particularly preferred impact modifier is LLDPE.

The polymer compositions may be prepared by any conventional methods known in the art, e.g. by mixing each of the components hereinbefore described. The composition may also be made by making the polypropylene components in a BORSTAR process as hereinbefore described and optionally compounding the resulting polymer with an impact modifier. If impact modifier is present, however, it is preferably introduced into the compositions used in the invention by carrying out a further polymerisation process in the presence of the propylene polymer components. If this latter process is used a heterophasic polypropylene is produced. In this case, a further external impact modifier may optionally be added after polymerisation is complete.

Heterophasic polypropylene may be prepared by any conventional procedure. For instance, the polypropylene produced in accordance with the processes discussed above may be transferred into a further reactor, preferably a gas phase reactor, in order to polymerize an impact modifier (e.g EPR).

This polymerization stage is preferably carried out as a gas-phase polymerization in one or more gas-phase reactors. It is particularly preferred that this polymerization stage is carried out in one gas-phase reactor to which the polypropylene is fed together with comonomers (e.g. ethylene and propene), and hydrogen as needed.

The conditions for the polymerization are within the limits of conventional production conditions, e.g. for EPR as disclosed in Encyclopedia of Polymer Science and Engineering, Second Edition, Vol. 6, pp. 545-558. The temperature for the polymerization of EPR is preferably 40 to 90°C, and more preferably 60 to 70°C. The pressure is preferably 500 to 3000 kPa, preferably 1000 to 2000 kPa. The process, e.g. comonomer content and MFR, may be controlled in a known manner.

Preferred compositions for use in the invention comprise less than 20 %wt, preferably less than 10 %wt, still more preferably less than 5 %wt of impact modifier based on the total weight of the composition. Particularly preferred compositions do not contain any impact modifier.

The MFR₂ of the polymer compositions used in the invention is preferably 1 to 40, more preferably 7 to 30 g/10 min, still more preferably 10 to 25 g/10min, e.g. about 15 to 20 g/10min. The molecular weight distribution of preferred compositions is in the range 1.5 to 10, more preferably 2 to 7, still more preferably 3 to 5, e.g. about 2 to 4.

To ensure that the composition is in a suitable form for rotomoulding the products of any polymerisation reaction may be converted to powder form or pelletised. The average particle size of the powder/pellets is preferably less than 1000 microns, preferably 100 to 650 microns, e.g. about 500-600 microns. Suitably sized powder/pellets may, for example, be prepared by grinding.

Alternatively micropellets may be produced using the technique described in WO00/35646 wherein a polymer composition is extruded in melt form through a die and pelletised to give particles having a particular size distribution. The particles are then dried to very low levels of moisture to improve rotomouldability.

The polymer compositions of the present invention have a number of advantageous properties that render them especially suitable for use in the manufacture of rotomoulded articles. Rotomoulding may be carried out according to standard conditions. The polymer powder is placed in a mould which is then transferred to an oven and rotated, preferably about two axes to distribute the polymer powder over the hot surfaces of the mould. The heating cycle is continued until all of the powder has melted and formed a continuous layer within the mould. The mould is then removed from the oven and cooled until the polymer has solidified. The moulded article is then removed.

The length of time for which the mould must be heated depends on the nature of the article being moulded, the amount and nature of polymer composition present and the temperature of the oven. Typical rotomoulding oven temperatures are 230 to 400 °C, more particularly 260 to 320 °C (e.g. about 290 °C). Heating time is chosen such that the peak internal air temperature (PIAT) in the mould is 160 to 300 °C, more preferably 170 to 250 °C (e.g. about 240 °C). This temperature can be measured using a Rotolog^{®} or similar equipment to monitor the temperature or it may be chosen based on previous experience. The oven may optionally be pressurised to reduce the amount of time in the mould. Typical pressures that may be used are less than 4 bar, more preferably less than 1 bar (e.g. about 0.5 bar).

Cooling may be carried out under a stream of air, water spray or mist or simply in ambient air at room temperature. A combination of these methods may also be employed. Preferably cooling is achieved using a combination of blown air followed by ambient air or just blown air. Cooling times are normally of similar magnitude to heating times or slightly longer. Slow cooling further reduces the amount of warpage in an article, but the compositions of this invention are much less prone to warpage than the polypropylene compositions in the prior art. The moulded article may be removed from the mould at any convenient time after solidification has occurred.

The skilled man is able to manipulate the temperature, time and rotation speed/ratio within a rotomoulding apparatus to ensure that well-formed moulded articles are produced. Particularly preferred rotomoulding conditions are: oven temperature 230-350 °C (e.g. 290°C), PIAT 170 to 250 °C (e.g. 240 °C), oven time 5 mins to 120 mins (e.g. about 15 mins), rotation ratio 0.1-20 rpm/0.1-20 rpm (e.g. 9 rpm/1.4 rpm).

An advantage of using the polymer compositions hereinbefore described in rotomoulding is that the resulting rotomoulded articles have an excellent stiffness as well as surprisingly low warpages.

Compositions for use in the present invention preferably have a tensile modulus that is greater than the tensile modulus calculated on a weight basis from the tensile moduli of each of the propylene polymer components of which said composition is comprised (wherein the tensile modulus is determined on samples machinated from rotomoulded samples as described in the examples). Preferred compositions have a tensile modulus of at least 1200 MPa, more preferably at least 1300 MPa, still more preferably at least 1400 MPa, e.g. at least 1500 MPa.

Compositions for use in the present invention preferably have a warpage that is less than the warpage calculated on a weight basis from the warpages of each of the propylene polymer components of which said composition is comprised (wherein warpage is determined as described in the examples). Particularly preferably the compositions have a warpage that is less than 50 %, still more preferably less than 20 % of the warpage calculated on a weight basis as described above. Preferred compositions have a warpage of less than 25 mm, more preferably less than 15 mm, still more preferably less than 10 mm, e.g. less than 5 mm.

Still more preferably compositions for use in the present invention have a tensile modulus that is greater than the tensile modulus calculated on a weight basis from the tensile moduli of each of the propylene polymer components of which said composition is comprised and a warpage that is less than the warpage calculated on a weight basis from the warpages of each of the propylene polymer components of which said composition is comprised. Particularly preferred compositions for use in the present invention have a warpage ≤ -36 + (0.039 x Tensile Modulus), still more preferred compositions have a warpage ≤ -40 + (0.039 x Tensile Modulus), yet further preferred compositions have a warpage ≤ -43 + (0.039 x Tensile Modulus), e.g. compositions have a warpage ≤ -46 + (0.039 x Tensile Modulus).

Further preferred compositions for use in the present invention have at least two (preferably all) of the following properties (i)-(iii) wherein the tensile modulus is determined on samples machinated from rotomoulded samples as described in the examples and warpage and HDT B is determined as described in the examples:
i) Tensile Modulus (MPa): at least 1200, preferably at least 1300, e.g. at least 1400
ii) Warpage (mm): less than 15, preferably less than 10, e.g. less than 5
iii) HDT B (°C): at least 90 °C, preferably at least 100 °C, e.g. at least 105 °C

Representative examples of articles that may be rotomoulded using the compositions of the present invention include automotive parts (e.g. fuel tanks, mud guards and air ducts), furniture (e.g. design furniture, garden furniture), garden equipment (e.g. fences), interior parts (e.g. washing machine, dishwasher parts, heater parts) and tanks (e.g. hot water tanks).

The invention will now be further illustrated by the following non-limiting examples.

### Analytical Tests

Values quoted in the description and examples are measured according to the following tests:
i) MFR₂ was measured in accordance with ISO 1133 at 230°C with a 2.16 kg load for polypropylene and at 190 °C with a 2.16 kg load for polyethylene.
ii) Density was measured according to ISO 1183
iii) The weight average molecular weight, Mw and the molecular weight distribution (MWD = Mw/Mn wherein Mn is the number average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54×10⁻⁵ and a: 0.725 for PS, and K: 3.92×10⁻⁴ and a: 0.725 for PE).
iv) Comonomer content (weight percent) was determined in a known manner based on FTIR, calibrated with C¹³ NMR
v) Melting temperature (Tₘ), crystallization temperature (T_{c}) and degree of crystallinity (X_{c}) were measure according to ISO11357. The samples were cut from compression molded, 0.2 mm films. The measurements were performed at the following conditions:

| **Stage** | **Temperature Program** | **Heating/Cooling Rate** | **Time** |
|---|---|---|---|
| | | *°Clmin* | *min* |
| 1^{st} heating | 20-225 °C | 10 | |
| Isothermal | 225 °C | | 5 |
| Cooling | 225-20 °C | -10 | |
| Isothermal | 20 | | 1 |
| 2^{nd} heating | 20-225 °C | 10 | |

The Tₘ and X_{c} were determined from the second heating. The degree of crystallinity (Xc) was calculated using a melting enthalpy of 100 % PP equal to 209 J/g.

### STIFFNESS PROPERTIES

viii) Stiffness was measured on specimen (according to ISO3167 - Multipurpose test specimen, type B (milled)) according to ISO 527-2:1993. The thickness of the compression moulded samples was 4 mm and the thickness of the rotation moulded samples was 3.3-3.8 mm. The modulus was measured at a speed of 1 mm/min and stress at yield was measured at 50 mm/min.

### THERMAL RESISTANCE

ix) Heat Deflection Temperature was measured according to ISO-75-2: Method B on compression moulded plaques having a thickness of 4 mm.

### WARPAGE

x) Warpage was determined on compression moulded articles according to the method described by Glomsaker, T et al. in Polymer Engineering and Science 45, 945-952 (2005) except that the melting temperature used was 225 °C rather than 200 °C.

### Preparation of propylene polymer components

Polymers having the properties set out in the table below were prepared according to methods described in the prior art indicated or purchased from the supplier indicated.

| Polymer | Nature | MFR₂ g/10min | Nucleated | C₂ content Wt% | Tc °C | Tensile Modulus MPa | Bar Warpage mm | HDT B (°C) |
|---|---|---|---|---|---|---|---|---|
| 1^{a} | Homopolymer | 20 | Yes, with a polymer of VCH | - | 129 | 2200 | 47 | 122 |
| 2^{b} | Copolymer (random) | 23 | Millad 3988 | 5.7 | 110 | 640 | 1 | 60 |

| | | | | | | | | |
|---|---|---|---|---|---|---|---|---|
| a -Prepared according to Example 1 of WO00/68315 b- Prepared according to EP0887379 with a catalyst as described in EP-A-491566 | | | | | | | | |

### Preparation of polymer compositions

Polymers comprising the polymers set out in table below were prepared by dry-blending, pellet with pellet, in a blender and subsequent melt blending in a twin screw extruder. The polymers were then cryogenically ground with liquid N₂ assistance to form a powder that is 500-600 microns in average particle size.

| Composition | Polymer 1 (wt %) | Polymer 2 (wt %) |
|---|---|---|
| C1 | 40 | 60 |
| C2 | 50 | 50 |
| C3 | 60 | 40 |
| C4 | 70 | 30 |

| | | |
|---|---|---|
| # All compositions were compounded together with 500 ppm Irgafos 168 and 800 ppm Irganox 1010 | | |

### Preparation of rotomoulded box

Compositions 1-4 were rotomoulded to form boxes having a wall thickness of 3.5 mm using a Ferry Rotospeed E60 rotomoulding machine (shuttle with biaxial rotation) according to the following conditions: Oven temperature 290 °C, PIAT 240 °C, oven time 14 min, rotation ratio 9/1.4, with no reversing of the rotation, cooling time 15 mins with forced air

The properties of the resulting boxes are summarised in the table below.

| Compositon | Tensile Modulus (MPa) | Calculated Tensile Modulus (MPa)* | Bar Warpage (mm) | Calculated Bar Warpage (mm)* | HDT B (°C) |
|---|---|---|---|---|---|
| C1 | 1270 | 1264 | 1 | 19.4 | 105 |
| C2 | 1487 | 1420 | 2.7 | 24.0 | >105 |
| C3 | 1644 | 1576 | 9 | 28.6 | >105 |
| C4 | 1716 | 1532 | 31.7 | 33.2 | >105 |

| | | | | | |
|---|---|---|---|---|---|
| * Calculated on a weight basis from the moduli/warpages of the propylene polymer components comprising the composition, e.g. the calculated tensile modulus of C1 is ((40x2200)+(60x640))/ 100 | | | | | |

## Claims

1. Use of a polymer composition for rotomoulding, wherein said composition comprises:
(i) at least two propylene polymer components; and
(ii) a nucleating agent.

2. Use as claimed in claim 1, wherein said propylene polymer components have different isotacticity and/or different comonomer content.

3. Use as claimed in claim 1 or claim 2, wherein said propylene polymer components have different crystallisation temperatures (Tc) (e.g. the at least two propylene polymer components have Tcs differing by at least 5 °C).

4. Use as claimed in any preceding claim, wherein said propylene polymer components are multimodal in comonomer distribution.

5. Use as claimed in any preceding claim, wherein said propylene polymer components comprise a propylene homopolymer and one or more propylene copolymers.

6. Use as claimed in claim 5, wherein said propylene copolymer component is a random copolymer.

7. Use as claimed in any preceding claim, wherein said composition is nucleated with a polymeric nucleating agent.

8. Use as claimed in claim 7, wherein said polymeric nucleating agent is a polymer containing vinyl compound units.

9. Use as claimed in claim 8 wherein said vinyl compound units derive from a vinyl compound of formula (I): 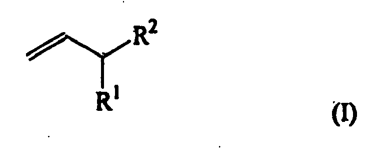 wherein R¹ and R², together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or R¹ and R² independently represent a linear or branched C₄₋₃₀ alkane, a C₄₋₂₀ cycloalkane or a C₄₋₂₀ aromatic ring.

10. Use as claimed in any preceding claim, wherein said composition is nucleated with a non-polymeric nucleating agent.

11. Use as claimed in any preceding claim, wherein said composition comprises 10 to 70 wt% of at least one propylene polymer component and 10 to 70 wt% of at least one other propylene polymer component (based on total weight of the composition).

12. Use as claimed in claim 11, wherein said composition comprises 30 to 60 wt% (e.g. 40 to 50 wt%) of at least one propylene polymer component and 30 to 60 wt% (e.g. 40 to 50 wt%) of at least one other propylene polymer component.

13. Use as claimed in any preceding claim, wherein said composition comprises less than 20 %wt of impact modifier.

14. Use as claimed in any preceding claim, wherein said composition does not comprise an impact modifier.

15. A process for the preparation of an article comprising rotomoulding a polymer composition as defined in any one of claims 1 to 14.

16. A process as claimed in claim 15, wherein said composition has a tensile modulus that is greater than the tensile modulus calculated on a weight basis from the tensile moduli of each of the propylene polymer components of which said composition is comprise.

17. A process as claimed in claim 16 or claim 17, wherein said composition has a warpage that is less than the warpage calculated on a weight basis from the warpages of each of the propylene polymer components of which said composition is comprised.

18. An article obtainable by the process of any one of claims 15-17.

19. A rotomoulded article comprising a polymer composition as defined in any one of claims 1 to 14.

20. A rotomoulded article as claimed in claim 18 or claim 19, wherein said composition has a tensile modulus that is greater than the tensile modulus calculated on a weight basis from the tensile moduli of each of the propylene polymer components of which said composition is comprised.

21. A rotomoulded article as claimed in any one of claims 18 to 20, wherein said composition has a warpage that is less than the warpage calculated on a weight basis from the warpages of each of the propylene polymer components of which said composition is comprised.

22. A rotomoulded article as claimed in any one of claims 18 to 21, wherein said composition has at least two of the following properties (i)-(iii):
i) Tensile Modulus (MPa): at least 1200, preferably at least 1300, e.g. at least 1400
ii) Warpage (mm): less than 15, preferably less than 10, e.g. less than 5
iii) HDT B (°C): at least 90 °C, preferably at least 100 °C, e.g. at least 105 °C

23. An article as claimed in any one of claims 18 to 22 which is an automotive part, furniture, garden equipment, interior part or tank.

## Patentansprüche

1. Verwendung einer Polymerzusammensetzung für das Rotationsformen, wobei diese Zusammensetzung umfaßt:
(i) zumindest zwei Propylenpolymerkomponenten und
(ii) einen Keimbildner.

2. Verwendung nach Anspruch 1, wobei die Propylenpolymerkomponenten eine unterschiedliche Isotaktizität und/oder einen unterschiedlichen Comonomergehalt aufweisen.

3. Verwendung nach Anspruch 1 oder Anspruch 2, wobei die Propylenpolymerkomponenten unterschiedliche Kristallisationstemperaturen (Tc) aufweisen (z.B. haben die zumindest zwei Propylenpolymerkomponenten Tc-Werte, die um mindestens 5°C differieren).

4. Verwendung nach einem der vorstehenden Ansprüche, wobei die Propylenpolymerkomponenten eine multimodale Comonomerverteilung aufweisen.

5. Verwendung nach einem der vorstehenden Ansprüche, wobei die Propylenpolymerkomponenten ein Propylenhomopolymer und ein oder mehrere Propylencopolymere umfassen.

6. Verwendung nach Anspruch 5, wobei die Propylencopolymerkomponente ein statistisches Copolymer ist.

7. Verwendung nach einem der vorstehenden Ansprüche, wobei die Zusammensetzung einer Keimbildung mit einem polymeren Keimbildner unterzogen wird.

8. Verwendung nach Anspruch 7, wobei der polymere Keimbildner ein Polymer ist, das Einheiten in Form einer Vinylverbindung enthält.

9. Verwendung nach Anspruch 8, wobei die Einheiten in Form einer Vinylverbindung von einer Vinylverbindung der Formel (I) stammen: 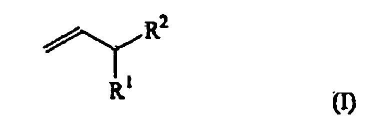 worin R¹ und R² zusammen mit dem Kohlenstoffatom, an das sie gebunden sind, ein gegebenenfalls substituiertes, kondensiertes Ringssystem oder einen gesättigten, ungesättigten oder aromatischen Ring bilden, wobei dieses Ringsystem oder der Ring 4 bis 20 Kohlenstoffatome umfaßt (z.B. 5 bis 12 Kohlenstoffatome), oder R¹ und R² unabhängig voneinander für ein lineares oder verzweigtes C₄₋₃₀-Alkan, ein C₄₋₂₀-Cycloalkan oder einen aromatischen C₄₋₂₀-Ring stehen.

10. Verwendung nach einem der vorstehenden Ansprüche, wobei die Zusammensetzung einer Keimbildung mit einem nicht-polymeren Keimbildner unterzogen wird.

11. Verwendung nach einem der vorstehenden Ansprüche, wobei die Zusammensetzung 10 bis 70 Gew.-% von zumindest einer Propylenpolymerkomponente und 10 bis 70 Gew.-% von zumindest einer anderen Propylenpolymerkomponente umfaßt (auf das Gesamtgewicht der Zusammensetzung bezogen).

12. Verwendung nach Anspruch 11, wobei die Zusammensetzung 30 bis 60 Gew.-% (z.B. 40 bis 50 Gew.-%) von zumindest einer Propylenpolymerkomponente und 30 bis 60 Gew.-% (z.B. 40 bis 50 Gew.-%) von zumindest einer anderen Propylenpolymerkomponente umfaßt.

13. Verwendung nach einem der vorstehenden Ansprüche, wobei die Zusammensetzung weniger als 20 Gew.-% eines schlagzähmachenden Zusatzstoffes umfaßt.

14. Verwendung nach einem der vorstehenden Ansprüche, wobei die Zusammensetzung keinen schlagzähmachenden Zusatzstoff umfaßt.

15. Verfahren zur Herstellung eines Gegenstandes, umfassend das Rotationsformen einer Polymerzusammensetzung nach einem der Ansprüche 1 bis 14.

16. Verfahren nach Anspruch 15, wobei die Zusammensetzung einen Zugmodul aufweist, der höher als der Zugmodul ist, der auf der Basis des Gewichtes aus den Zugmodulen jeder der Propylenpolymerkomponenten berechnet wurde, die die Zusammensetzung umfaßt.

17. Verfahren nach Anspruch 16 oder Anspruch 17, wobei die Zusammensetzung ein Verziehen aufweist, das geringer als das Verziehen ist, das auf der Basis des Gewichtes aus der Verziehung jeder der Propylenpolymerkomponenten berechnet wurde, die die Zusammensetzung umfaßt.

18. Gegenstand, der nach dem Verfahren nach einem der Ansprüche 15 bis 17 erhalten werden kann.

19. Rotationsgeformter Gegenstand, der eine Polymerzusammensetzung nach einem der Ansprüche 1 bis 14 umfaßt.

20. Rotationsgeformter Gegenstand nach Anspruch 18 oder Anspruch 19, wobei die Zusammensetzung einen Zugmodul aufweist, der größer als der Zugmodul ist, der auf der Basis des Gewichtes aus den Zugmodulen jeder der Propylenpolymerkomponenten berechnet wurde, die die Zusammensetzung umfaßt.

21. Rotationsgeformter Gegenstand nach einem der Ansprüche 18 bis 20, wobei die Zusammensetzung ein Verziehen aufweist, das geringer als das Verziehen ist, das auf der Basis des Gewichtes aus dem Verziehen jeder der Propylenpolymerkomponenten berechnet wurde, die die Zusammensetzung umfaßt.

22. Rotationsgeformter Gegenstand nach einem der Ansprüche 18 bis 21, wobei die Zusammensetzung zumindest zwei der folgenden Eigenschaften (i) bis (iii) aufweist:
(i) Zugmodul (MPa): mindestens 1200, vorzugsweise mindestens 1300, z.B. mindestens 1400
(ii) Verziehen (mm): weniger als 15, vorzugsweise weniger als 10, z.B. weniger als 5
(iii) HDT B(°C): mindestens 90°C, vorzugsweise mindestens 100 °C, z.B. mindestens 105°C

23. Gegenstand nach einem der Ansprüche 18 bis 22, der ein Kraftfahrzeugteil, ein Einrichtungsgegenstand, eine Gartenausrüstung, ein Innenteil oder ein Behälter ist.

## Revendications

1. Utilisation d'une composition de polymère pour le rotomoulage, dans laquelle ladite composition comprend :
(i) au moins deux composants polymères de propylène ; et
(ii) un agent de nucléation.

2. Utilisation selon la revendication 1, dans laquelle lesdits composants polymères de propylène ont une isotacticité différente et/ou une teneur en comonomère différente.

3. Utilisation selon la revendication 1 ou la revendication 2, dans laquelle lesdits composants polymères de propylène ont des températures de cristallisation différentes (Tc) (par exemple les au moins deux composants polymères de propylène ont des Tc différant par au moins 5°C).

4. Utilisation selon l'une quelconque des revendications précédentes, dans laquelle lesdits composants polymères de propylène sont multimodaux dans une distribution comonomère.

5. Utilisation selon l'une quelconque des revendications précédentes, dans laquelle lesdits composants polymères de propylène comprennent un homopolymère de propylène et un ou plusieurs copolymères de propylène.

6. Utilisation selon la revendication 5, dans laquelle ledit composant copolymère de propylène est un copolymère statistique.

7. Utilisation selon l'une quelconque des revendications précédentes, dans laquelle ladite composition est nucléée par un agent de nucléation polymère.

8. Utilisation selon la revendication 7, dans laquelle ledit agent de nucléation polymère est un polymère contenant des motifs vinyliques.

9. Utilisation selon la revendication 8, dans laquelle lesdits motifs vinyliques sont dérivés d'un composé vinylique de formule (I) : 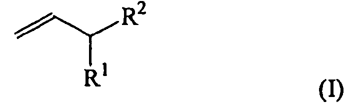 dans laquelle R¹ et R², avec l'atome de carbone auquel ils sont attachés, forment un éventuellement substitué, système de cycles condensés ou cycle saturé, insaturé ou aromatique, où ledit système de cycles ou ledit cycle comprend de 4 à 20 atomes de carbone (par exemple de 5 à 12 atomes de carbone) ou R¹ et R² représentent indépendamment un cycloalcane en C₄-C₂₀ , un cycle aromatique en C₄-C₂₀, ou un alcane en C₄-C₃₀ linéaire ou ramifié.

10. Utilisation selon l'une quelconque des revendications précédentes, dans laquelle ladite composition est nucléée par un agent de nucléation non polymère.

11. Utilisation selon l'une quelconque des revendications précédentes, dans laquelle ladite composition comprend de 10 à 70 % en poids d'au moins un composant polymère de propylène et de 10 à 70 % en poids d'au moins un autre composant polymère de propylène (par rapport au poids total de la composition).

12. Utilisation selon la revendication 11, dans laquelle ladite composition comprend de 30 à 60 % en poids (par exemple de 40 à 50 % en poids) d'au moins un composant polymère de propylène et de 30 à 60 % en poids (par exemple de 40 à 50 % en poids) d'au moins un autre composant polymère de propylène.

13. Utilisation selon l'une quelconque des revendications précédentes, dans laquelle ladite composition comprend moins de 20 % en poids d'un modificateur d'impact.

14. Utilisation selon l'une quelconque des revendications précédentes, dans laquelle ladite composition ne comprend pas de modificateur d'impact.

15. Procédé de préparation d'un article comprenant le rotomoulage d'une composition de polymère selon l'une quelconque des revendications 1 à 14.

16. Procédé selon la revendication 15, dans lequel ladite composition possède un module de tension qui est supérieur au module de tension calculé par rapport au poids des modules de tension de chaque composant polymère de propylène dont ladite composition est constituée.

17. Procédé selon la revendication 16 ou la revendication 17, dans lequel ladite composition possède un gauchissement qui est inférieur au gauchissement calculé par rapport au poids des gauchissements de chaque composant polymère de propylène dont ladite composition est constituée.

18. Article pouvant être obtenu par le procédé selon l'une quelconque des revendications 15 à 17.

19. Article rotomoulé comprenant une composition de polymère selon l'une quelconque des revendications 1 à 14.

20. Article rotomoulé selon la revendication 18 ou la revendication 19, dans lequel ladite composition possède un module de tension qui est supérieur au module de tension calculé par rapport au poids des modules de tension de chaque composant polymère de propylène dont ladite composition est constituée.

21. Article rotomoulé selon l'une quelconque des revendications 18 à 20, dans lequel ladite composition possède un gauchissement qui est inférieur au gauchissement calculé par rapport au poids des gauchissements de chaque composant polymère de propylène dont ladite composition est constituée.

22. Article rotomoulé selon l'une quelconque des revendications 18 à 21, dans lequel la composition possède au moins deux des propriétés (i) à (iii) suivantes :
i) module de tension (MPa) : au moins 1200, de préférence au moins 1300, par exemple au moins 1400
ii) gauchissement (mm): inférieur à 15, de préférence inférieur à 10, par exemple inférieur à 5
iii) HDT/B (°C): au moins 90 °C, de préférence au moins 100 °C, par exemple au moins 105 °C

23. Article selon l'une quelconque des revendications 18 à 22, qui est une partie automobile, un meuble, un équipement de jardin, une partie intérieure ou une cuve.
